# EUROPÄISCHE PATENTANMELDUNG

(11) **EP 1 533 159 A1**
(43) Veröffentlichungstag der Anmeldung: **25.05.2005**
(21) Anmeldenummer: 04026571.2
(22) Anmeldetag: 09.11.2004
(51) Int. Cl.: B60J 7/02

(54) **Verstellmechanik für ein Schiebe-/Hub-Dach**

(30) Priorität: 24.11.2003 DE 10354832
(71) Anmelder: ArvinMeritor GmbH, 63128 Dietzenbach (DE)
(72) Erfinder: Grimm, Rainer, 60299 Frankfurt (DE); Böhm, Horst, 60599 Frankfurt (DE); Riess, Claudia, 64405 Lichtenberg (DE); Röhnke, Manfred, 63322 Rödermark (DE)
(74) Vertreter: Sties, Jochen, Dipl.-Ing.

(57) **Zusammenfassung**

Es ist eine Baugruppe geschaffen bestehend aus mindestens einer Führungsschiene (10), einem in der Führungsschiene verstellbaren Schlitten (12) und einem Deckelträger (22), der dafür vorgesehen ist, einen Deckel (7, 9) eines Schiebe/Hub-Daches für ein Fahrzeug zu tragen, wobei der Schlitten mit einer Hubkulisse (18), einer Führungskulisse (14) und einer Rastkulisse (16) versehen ist.

## Beschreibung

Die Erfindung betrifft ein Schiebe-/Hub-Dach für ein Fahrzeug und insbesondere die Mechanik zur Verstellung eines Deckels eines solchen Schiebe-/Hub-Daches.

Aus dem Stand der Technik sind eine Vielzahl von verschiedenen Mechanismen bekannt, mittels denen ein einziger Deckel eines Schiebe-/Hub-Dachs oder auch mehrere Deckel eines solchen Dachs verstellt werden können. Allen Mechanismen ist gemeinsam, daß sie den Deckel nach außen anheben und dann nach hinten verfahren können, so daß eine Dachöffnung teilweise oder vollständig freigegeben ist.

Die Aufgabe der Erfindung besteht darin, einen Mechanismus für ein Schiebe-/Hub-Dach zu schaffen, der sich durch einen kleinen Bauraum sowie einen mechanisch einfachen Aufbau auszeichnet.

Erfindungsgemäß ist zu diesem Zweck eine Baugruppe vorgesehen, bestehend aus mindestens einer Führungsschiene, einem in der Führungsschiene verstellbaren Schlitten und einem Deckelträger, der dafür vorgesehen ist, einen Deckel eines Schiebe-/Hub-Daches für ein Fahrzeug zu tragen, wobei der Schlitten mit einer Hubkulisse, einer Führungskulisse und einer Rastkulisse versehen ist. Die Erfindung beruht auf dem Grundgedanken, in dem Schlitten sämtliche Kulissen zu vereinen, die zur Betätigung des Deckelträgers erforderlich sind. Auf diese Weise ergibt sich eine sehr präzise Funktion bei gleichzeitig geringen Herstellungskosten. Es muß nämlich nur ein einziger Schlitten hergestellt werden, der beispielsweise spritzgegossen werden kann. Die entsprechende Spritzgußform kann mit sehr hoher Präzision hergestellt werden, so daß auch die im Schlitten angeordneten Kulissen mit entsprechend hoher Präzision relativ zueinander angeordnet sind. Da außerdem die Verstellung eines einzigen Bauteils, nämlich des Schlittens, sämtliche Verstellbewegungen des Deckelträgers hervorruft, gibt es keinerlei Probleme durch sich addierende Toleranzen von unterschiedlichen Bauteilen.

Vorteilhafte Ausführungsformen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 eine perspektivische Ansicht eines Schiebe-/Hub-Daches eines Fahrzeugs;
- die Figuren 2a bis 2c eine Seitenansicht, eine perspektivische Ansicht mit weggelassener Führungsschiene sowie eine weitere perspektivische Ansicht einer Mechanik gemäß einer ersten Ausführungsform der Erfindung, wobei sich das Schiebe-/Hub-Dach in der geschlossenen Stellung befindet;
- die Figuren 3a bis 3c in Ansichten entsprechend denjenigen der Figuren 2 die Mechanik in einem teilweise ausgestellten Zustand;

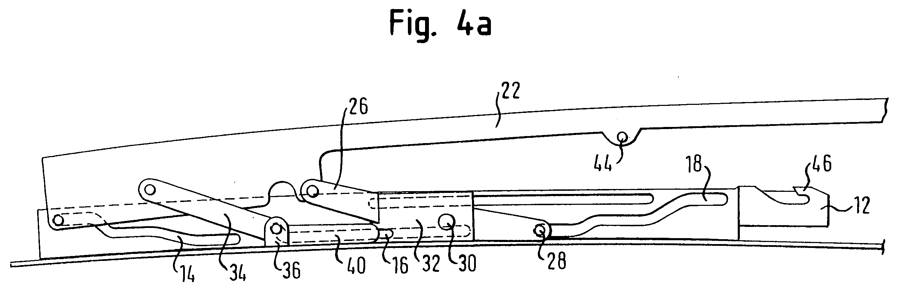

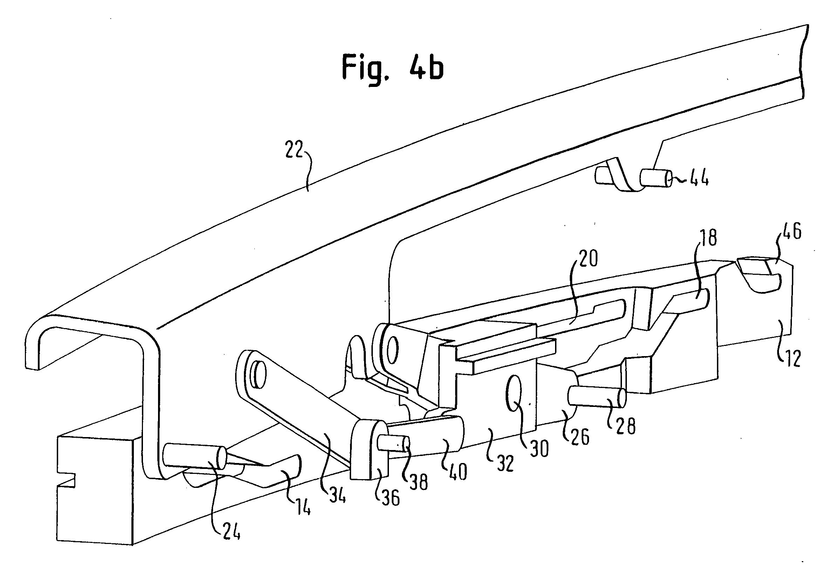

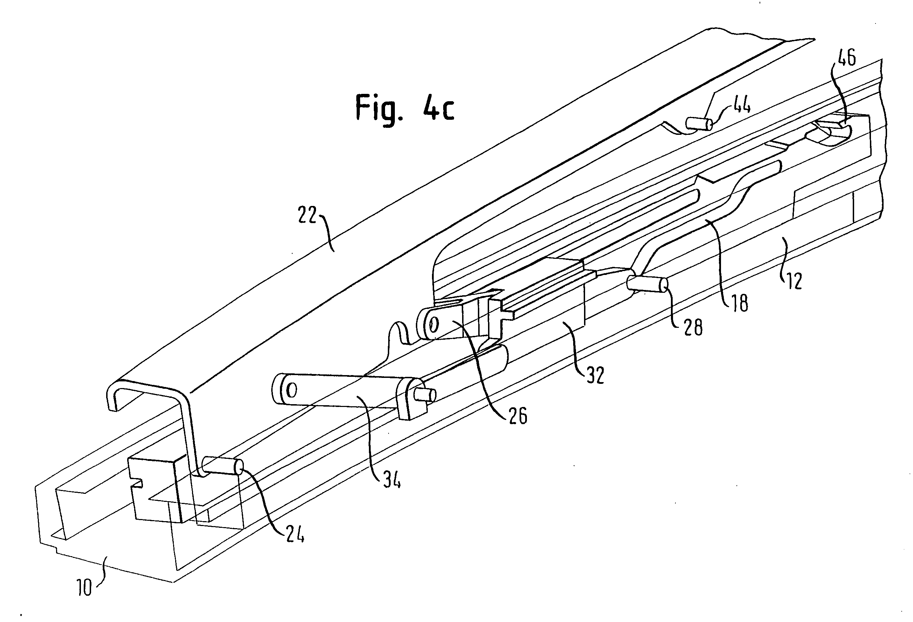

- die Figuren 4a bis 4c in Ansichten entsprechend denjenigen der Figuren 2 die Mechanik des Schiebe-/Hub-Daches im vollständig ausgestellten Zustand;
- Figur 5 in einer Seitenansicht eine Mechanik eines Schiebe-/Hub-Daches gemäß einer zweiten Ausführungsform, wobei sich die Mechanik in der geschlossenen Stellung befindet;
- Figur 6 die Mechanik von Figur 5 in einer teilweise geöffneten Stellung;
- Figur 7 die Mechanik von Figur 6 in einer vollständig geöffneten Stellung;
- Figur 8 in einer perspektivischen Ansicht ein Schiebe-/Hub-Dach gemäß einer dritten Ausführungsform, wobei sich die Mechanik in ihrer geschlossenen Stellung befindet;
- Figur 9 eine perspektivische Ansicht des Schlittens, des Deckelträgers sowie des Rasthakens der in Figur 8 gezeigten Mechanik; und
- Figur 10 in einer perspektivischen Ansicht den Schlitten und den Rasthaken der in Figur 8 gezeigten Mechanik.

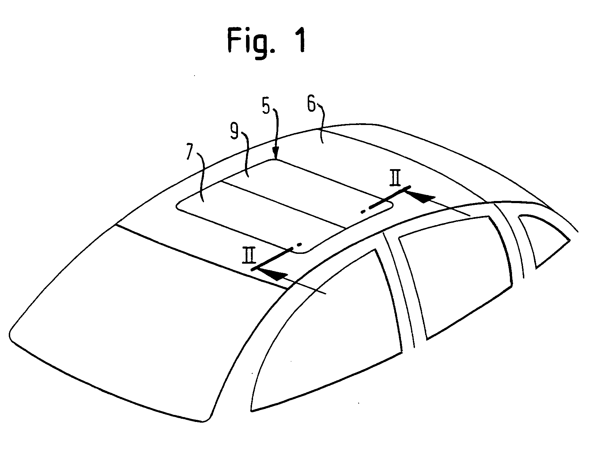

In Figur 1 ist ein Schiebe-/Hub-Dach 5 für ein Fahrzeugdach 6 gezeigt, das einen ersten Deckel 7 und einen zweiten Deckel 9 aufweist. Die beiden Deckel 7, 9 können aus ihrer in Figur 1 gezeigten Stellung nach außen angehoben und nach hinten verfahren werden, so daß sie eine Dachöffnung im Fahrzeugdach 6 teilweise oder vollständig freigeben.

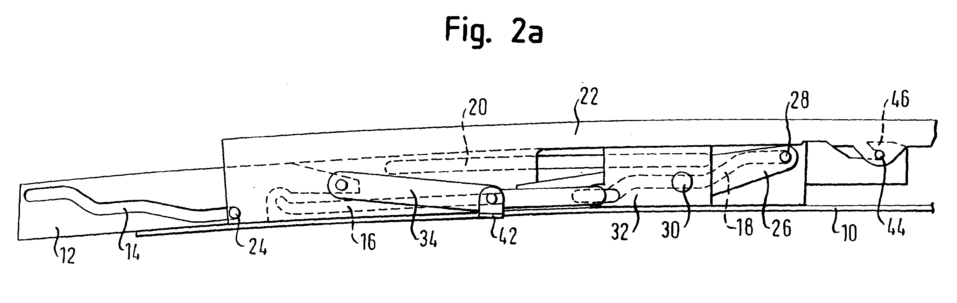

Anhand der Figuren 2a bis 2c wird nun die Mechanik des Schiebe-/Hub-Daches 5 beschrieben. Dabei wird nur auf die bezüglich Figur 1 auf der rechten Seite angeordnete Mechanik Bezug genommen; die auf der anderen Seite des Daches angeordnete Mechanik entsprechend spiegelbildlich der beschriebenen. Außerdem sind die auf der beschriebenen Seite der Mechanik spiegelbildlich vorhandenen Bauteile weggelassen worden, um eine übersichtlichere Darstellung zu erhalten.

Die Mechanik weist eine Führungsschiene 10 auf, die sich etwa in Fahrzeuglängsrichtung entlang dem Rand der Dachöffnung erstreckt. In der Führungsschiene 10 ist ein Schlitten 12 verschiebbar angeordnet, von dem hier nur eine Seite gezeigt ist. Die gegenüberliegende (als in der Figur zum Betrachter hin angeordnete) Seite des Schlittens ist spiegelbildlich zur gezeigten Seite ausgerührt.

Der Schlitten kann auf beliebige Weise entlang der Führungsschiene 10 verstellt werden, beispielsweise von einem (nicht dargestellten) Elektromotor, der über ein (nicht dargestelltes) Kabel mit dem Schlitten 12 gekoppelt ist. Der Schlitten 12 weist eine Führungskulisse 14, eine Rastkulisse 16, eine Hubkulisse 18 sowie eine Stützgleiternut 20 auf. Alle Kulissen und auch die Stützgleiternut können in einfacher Weise als vertiefte Bereiche im Schlitten ausgeführt werden, der beispielsweise aus Kunststoff besteht. Der Schlitten 12 kann insbesondere spritzgegossen sein.

Die Führungskulisse 14 befindet sich am in Fahrtrichtung gesehen vorderen Ende des Schlittens 12 und weist, betrachtet von hinten nach vorne, einen etwa parallel zur Längsrichtung der Führungsschiene verlaufenden, vergleichsweise kurzen Startabschnitt, daran anschließend einen vergleichsweise sanft ansteigenden Ausstellabschnitt, daran anschließend einen etwa parallel zur Längsrichtung der Führungsschiene verlaufenden, kurzen Zwischenabschnitt, daran anschließend einen vergleichsweise steil ansteigenden Hubabschnitt und daran anschließend einen etwa parallel zur Längsrichtung der Führungsschiene verlaufenden Endabschnitt auf. Allgemein ausgedrückt verläuft die Führungskulisse 14, betrachtet von hinten nach vorne, stufenweise ansteigend, wobei zwischen jeder Stufe ein schräg verlaufender Übergang vorgesehen ist.

Die Rastkulisse 16 besteht, wieder betrachtet von hinten nach vorne, aus einem etwa parallel zur Längsrichtung der Führungsschiene verlaufenden, vergleichsweise langen Leerlaufabschnitt und daran anschließend einem nach oben ansteigenden Hubabschnitt.

Die Hubkulisse 18 besteht, betrachtet wiederum von hinten nach vorne, aus einem etwa parallel zur Längsrichtung der Führungsschiene verlaufenden Startabschnitt, daran anschließend einem nach unten verlaufenden ersten Hubabschnitt, daran anschließend einem etwa parallel zur Längsrichtung der Führungsschiene verlaufenden Zwischenabschnitt, daran anschließend einem weiter nach unten verlaufenden zweiten Hubabschnitt und daran anschließend einem etwa parallel zur Längsrichtung der Führungsschiene verlaufenden Endabschnitt. Allgemein ausgedrückt verläuft die Hubkulisse 18 etwa spiegelbildlich zur Führungskulisse 14.

Die Stützgleiternut 20 verläuft geradlinig etwa parallel zur Längsrichtung der Führungsschiene.

Die Mechanik weist einen Deckelträger 22 auf, an dem einer der Deckel 7, 9 des Schiebe-/Hub-Daches 5 angebracht werden kann. Der Deckelträger 22 weist an seinem in Fahrtrichtung gesehen vorderen Ende einen Führungsstift 24 auf, der in die Führungskulisse 14 eingreift. Mit der Hubkulisse 18 ist der Deckelträger 22 durch einen Hubhebel 26 verbunden, der mit einem Hubstift 28 in die Hubkulisse 18 eingreift. An seinem entgegengesetzten Ende ist der Hubhebel 26 am Deckelträger angelenkt, während er mittig mittels eines Stützbolzens 30 in einem Stützgleiter 32 angestützt ist. Der Stützgleiter 32 ist verschiebbar in der Führungsschiene 10 geführt und greift außerdem in die Stützgleiternut 20 des Schlittens 12 ein. Der Hubhebel 26 wirkt, da er zwischen seinen beiden Enden mittels des Stützbolzens 30 drehbar gelagert ist, als zweiarmiger Hebel, ähnlich einer Wippe.

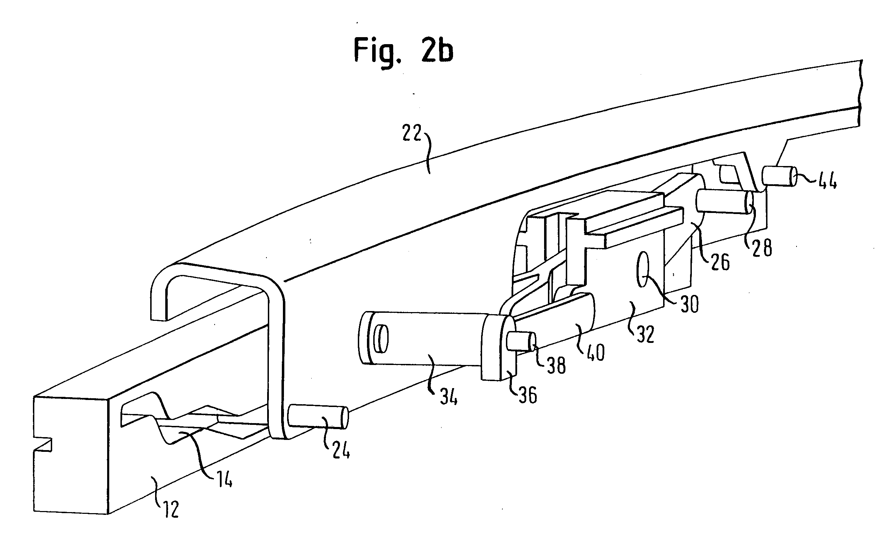

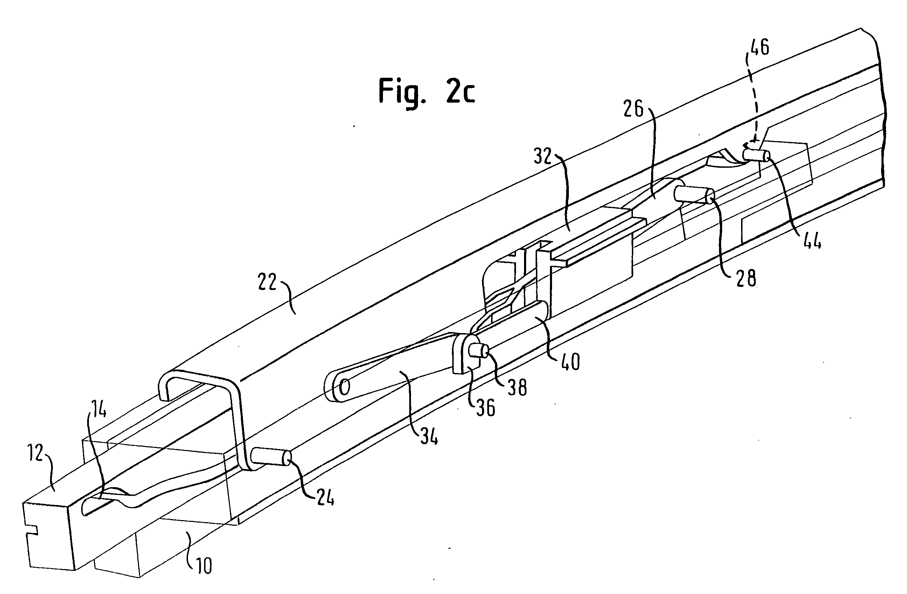

Am Deckelträger 22 ist schwenkbar ein Koppelhebel 34 mit einem seiner beiden Enden angebracht. Das entgegengesetzte Ende ist schwenkbar mit einem Rasthaken 36 gekoppelt, der mit einem Raststift 38 versehen ist. Der Raststift 38 greift in die Rastkulisse 16 des Schlittens 12 ein. Der Rasthaken 36 ist durch einen Schwenkhebel 40 schwenkbar mit dem Stützgleiter 32 verbunden, wobei die Verbindung durch ein Langloch erhalten ist. Der Schwenkhebel 40 ist also nur in vertikaler Richtung gelagert; eine Verschiebung entlang der Längsrichtung der Führungsschiene 10 ist zugelassen. Der Rasthaken 36 greift in seiner in den Figuren 2 gezeigten Stellung in eine Rastaussparung 42 in der Führungsschiene 10 ein. Auf diese Weise ist er in der Längsrichtung der Führungsschiene 10 arretiert.

Schließlich ist der Deckelträger 22 mit dem Schlitten 12 durch zwei Riegelelemente verbunden, nämlich einen am Deckelträger angeordneten Riegelbolzen 44, an dem ein Riegelhaken 46 angreift, der in Fahrtrichtung gesehen hinter dem Koppelhebel und dem Hubhebel ausgebildet ist.

In dem in den Figuren 2 gezeigten Zustand ist der Deckelträger 22 zuverlässig in seiner dort gezeigten Stellung arretiert, die dem geschlossenen Zustand des entsprechenden Deckels entspricht. Der Schlitten 12, der von dem ihm zugeordneten Antriebsmechanismus unverschiebbar in der Führungsschiene 10 gehalten ist, hält den Deckelträger 22 mittels des Führungsstiftes 24, der in die Führungskulisse 14 eingreift, und des Riegelbolzens 44, der hinter den Riegelhaken 46 greift, zuverlässig gegen eine Bewegung in vertikaler Richtung. Eine Bewegung entlang der Längsrichtung ist verhindert, weil der Deckelträger 22 über den Koppelhebel 34 mit dem Rasthaken 36 gekoppelt ist, der wiederum von der Rastaussparung 42 arretiert ist. Der in die Rastkulisse 16 eingreifende Raststift 38 des Rasthakens 36 gewährleistet, daß der Rasthaken die Rastaussparung nicht verlassen kann.

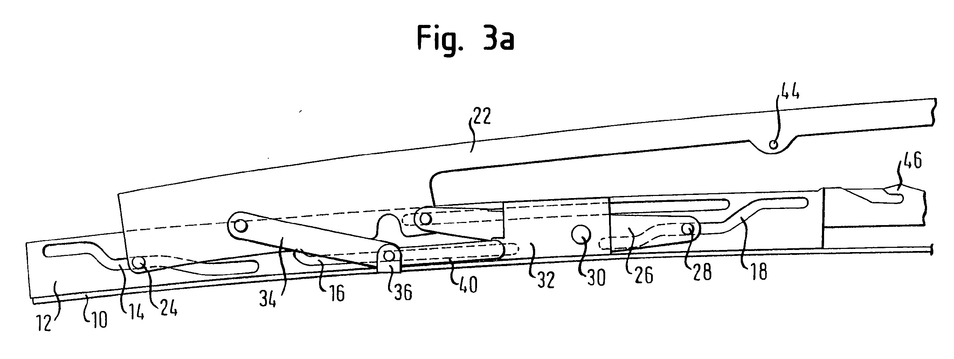

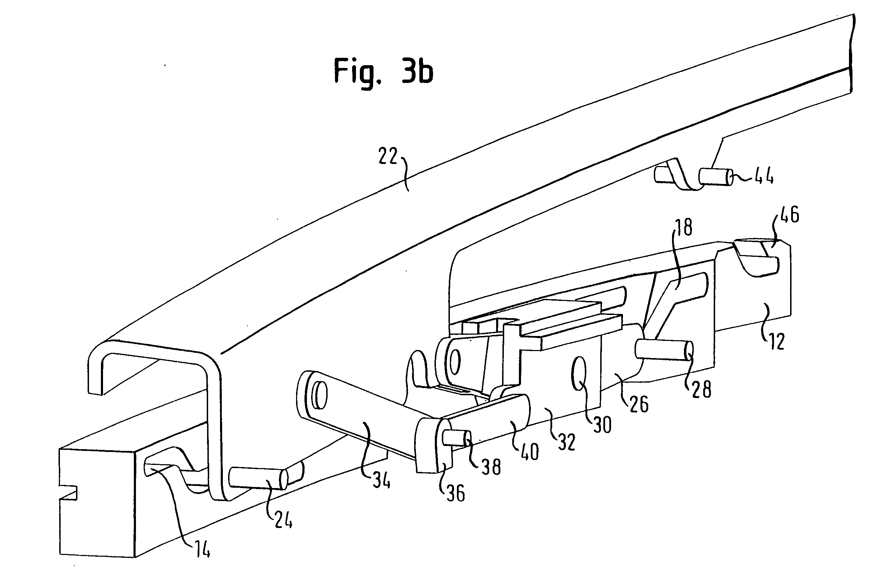

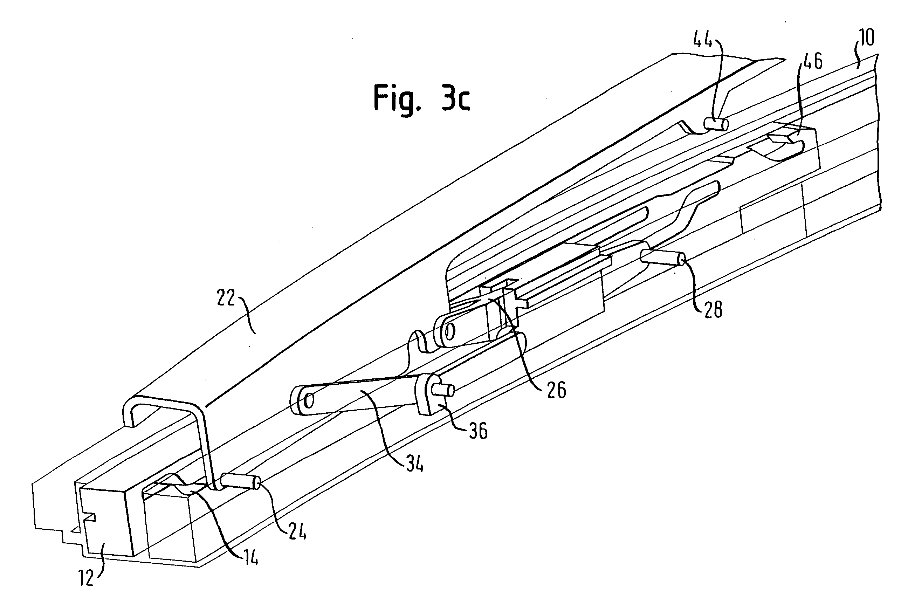

Um den Deckelträger 22 und damit den an ihm befestigten Deckel in eine teilweise geöffnete Stellung zu überführen, nämlich in die sogenannte Lüfterstellung, wird der Schlitten 12 bezüglich den Figuren nach rechts verfahren, also bezüglich des Fahrzeugs nach hinten. Die zur Lüfterstellung gehörige Position des Schlittens 12 ist in den Figuren 3 gezeigt. Wenn der Schlitten aus der in den Figuren 2 gezeigten Stellung in die in den Figuren 3 gezeigte Stellung überführt wird, wird zuerst der Riegelbolzen 44 vom Riegelhaken 46 freigegeben. Der Deckelträger 22 verbleibt dabei, betrachtet entlang der Längsrichtung der Führungsschiene 10, in seiner Position, da er weiterhin über den Koppelhebel 34, den Rasthaken 36 und die Rastaussparung 42 in Längsrichtung fest an der Führungsschiene arretiert ist. Bei der Verstellung des Schlittens relativ zum Deckelträger gleitet der Hubstift 28 aus dem Startabschnitt der Hubkulisse 18 in den tieferliegenden Zwischenabschnitt, wodurch der Hubhebel 26 um den Stützbolzen 30 verschwenkt wird und das entgegengesetzte Ende des Hubhebels 26 (und entsprechend der daran angelenkte Deckelträger 22) nach oben bewegt wird. Gleichzeitig wird der Führungsstift 24 aus dem Startabschnitt der Führungskulisse 14 über den Ausstellabschnitt in den Zwischenabschnitt bewegt, also nach oben. Dementsprechend wird auch das vordere Ende des Deckelträgers 22 nach oben bewegt. Während dieser nach oben gerichteten Ausstellbewegung des Deckelträgers 22 wird dessen Position entlang der Längsrichtung der Führungsschine 10 allein durch den Koppelhebel 34 bestimmt, dessen bezüglich den Figuren rechtes Ende vom Rasthaken 36 stationär gehalten wird. Da der Deckelträger 22 insgesamt nach oben bewegt wird und der Koppelhebel 34 eine Drehbewegung im Uhrzeigersinn ausführt, wird der Deckelträger 22 geringfügig nach hinten bewegt, also bezüglich den Figuren nach rechts. Die Langlochführung zwischen dem Schwenkhebel 40 des Rasthakens 36 und dem Stützgleiter 32 verhindert dabei, daß sich die verschiedenen Bauteile relativ zueinander verspannen.

Auch in der Lüfterstellung ist die Position des Deckelträgers 22 präzise bestimmt, wenn vorausgesetzt wird, daß der Schlitten 12 von seinem Antriebsmechanismus ortsfest gehalten wird. In vertikaler Richtung ist der Deckelträger durch die Führungskulisse 14 einerseits sowie die Hubkulisse 18 zusammen mit dem Hubhebel 26 und dem Stützgleiter 32 präzise positioniert. Entlang der Längsrichtung der Führungsschiene 10 ist die Position durch den Koppelhebel 34, den Rasthaken 36 und die Rastaussparung 42 bestimmt.

Um den Deckelträger 22 in eine vollständig geöffnete Position zu überführen, muß er zunächst vollständig nach außen ausgestellt werden. Zu diesem Zweck wird der Schlitten 12 weiter bezüglich des Fahrzeugs nach hinten verstellt, also bezüglich den Figuren nach rechts. Dabei gelangt der Führungsstift 24 in der Führungskulisse 14 und der Hubstift 28 in der Hubkulisse 18 jeweils in den Endabschnitt der entsprechenden Kulisse, wodurch der Deckelträger 22 maximal nach oben verfahren wird. Sobald sich der Führungsstift und der Hubstift am Beginn des entsprechenden Endabschnittes befinden, tritt der Raststift 38 in den Hubabschnitt der Rastkulisse 16 ein, wodurch der Rasthaken 36 in nahezu vertikaler Richtung aus der Rastaussparung 42 nach oben herausgezogen wird; die geringe Schwenkkomponente dieser Bewegung kann aufgrund des vergleichsweise langen Schwenkhebels 40 vernachlässigt werden.

Die verschiedenen Kulissen des Schlittens 12 sind relativ zueinander so angeordnet, daß der Führungsstift 24, der Hubstift 28 und der Raststift 38 etwa gleichzeitig das Ende der entsprechenden Kulisse erreichen. In diesem Zustand ist der Deckelträger maximal nach oben ausgestellt, während er in Längsrichtung verschiebbar ist, da der Rasthaken 36 vollständig aus der Rastaussparung 42 herausgezogen ist. Wenn nun der Schlitten 12 weiter bezüglich des Fahrzeugs nach hinten verstellt wird, nimmt er den Deckelträger 22 (und damit auch den am Deckelträger 22 angebrachten Deckel) mit.

Zum Schließen des Deckels wird der Schlitten in der entgegengesetzten Richtung verstellt, also bezüglich des Fahrzeugs nach vorne. Dabei wird der Deckelträger 22 über den Koppelhebel 34 vom Rasthaken 36 bzw. der Rastkulisse 16 mitgenommen. Der sich im Hubabschnitt der Rastkulisse 16 befindende Raststift 38 wird vom Hubabschnitt zum einen bezüglich des Fahrzeugs nach vorne und zum anderen nach unten beaufschlagt. Die nach unten gerichtete Komponente bleibt ohne Auswirkung, solange der Rasthaken 36 nicht die Rastaussparung 42 erreicht hat; der Rasthaken stützt sich in seinem angehobenen Zustand am Boden der Führungsschiene 10 ab. Die nach vorne gerichtete Komponente ist diejenige, die für die Verstellung des Deckelträgers 22 sorgt. Sobald der Rasthaken 36 die Rastaussparung 42 erreicht hat, wird er vom Hubabschnitt der Rastkulisse 16 nach unten in die Rastaussparung verschwenkt, wodurch der Deckelträger 22 (über den Koppelhebel 34) in Längsrichtung arretiert ist. Wenn der Schlitten 12 weiter verstellt wird, kommt es zur Relativbewegung zwischen der Führungskulisse 14 und der Hubkulisse 18 einerseits sowie dem Führungsstift 24 und dem Hubstift 28 andererseits. Der Deckel wird dadurch wieder geschlossen, bis schließlich der Riegelhaken 46 am Riegelbolzen 44 angreift. Der Mechanismus befindet sich dann wieder in seiner Ausgangsstellung.

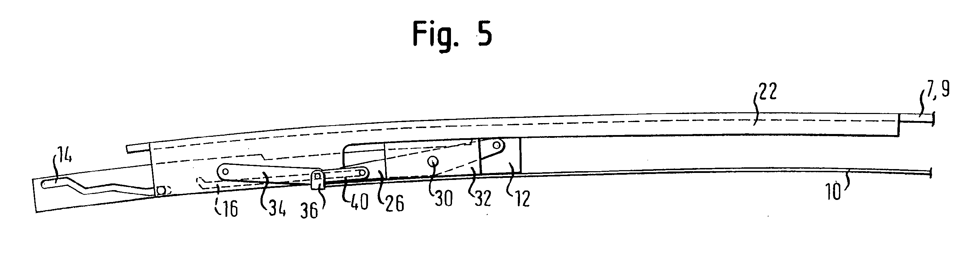

In den Figuren 5 bis 7 ist eine zweite Ausführungsform gezeigt. Für die von der ersten Ausführungsform bekannten Bauelemente werden dieselben Bezugszeichen verwendet, und es wird insoweit auf die obigen Erläuterungen verwiesen.

Der Unterschied zwischen der ersten und der zweiten Ausführungsform besteht darin, daß bei der zweiten Ausführungsform keine separate Verriegelung zwischen dem Schlitten 12 und dem Deckelträger 22 vorgesehen ist, wie dies bei der ersten Ausführungsform durch den Riegelbolzen 44 und den Riegelhaken 46 erfolgt.

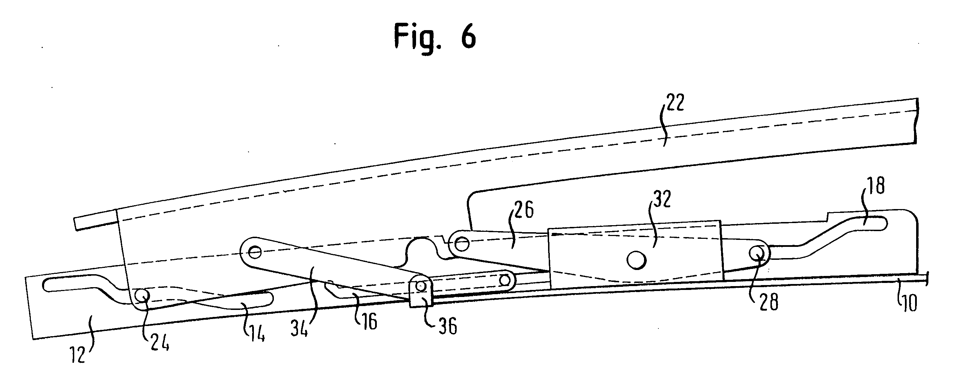

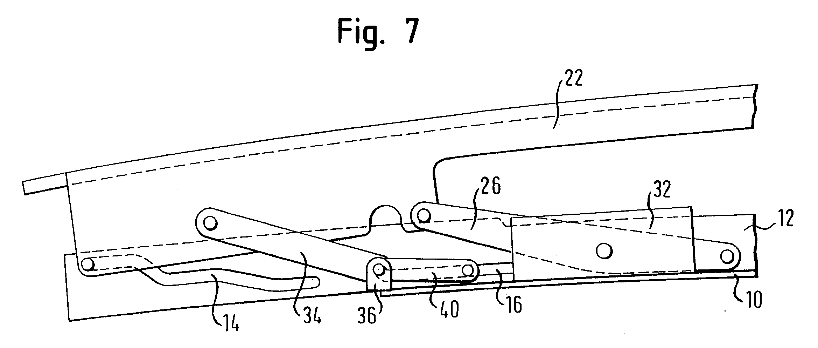

In dem in Figur 5 gezeigten Ausgangszustand, in welchem sich der Deckelträger 22 in der geschlossenen Stellung befindet, liegt der Deckelträger 22 am hinteren Ende des Schlittens 12 auf. Ausgehend von dieser Stellung kann er über die in Figur 6 gezeigte Lüfterstellung in die in Figur 7 gezeigte, vollständig geöffnete Stellung überführt werden.

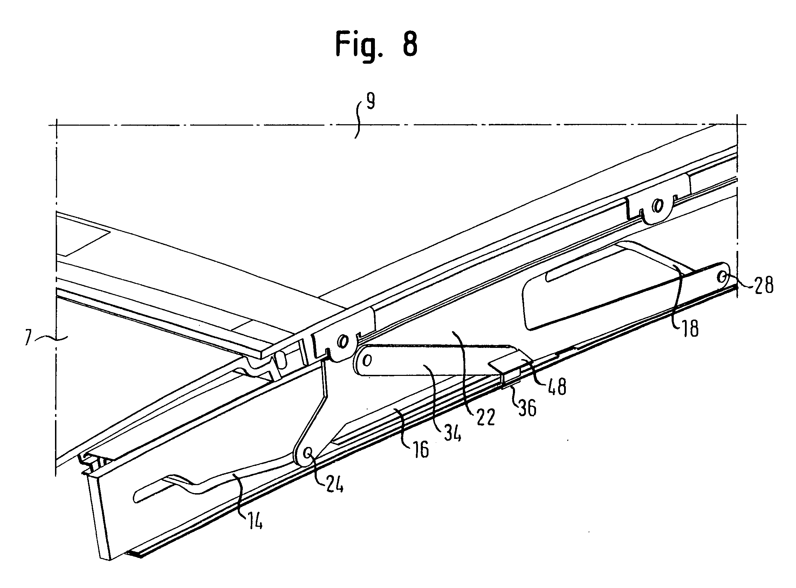

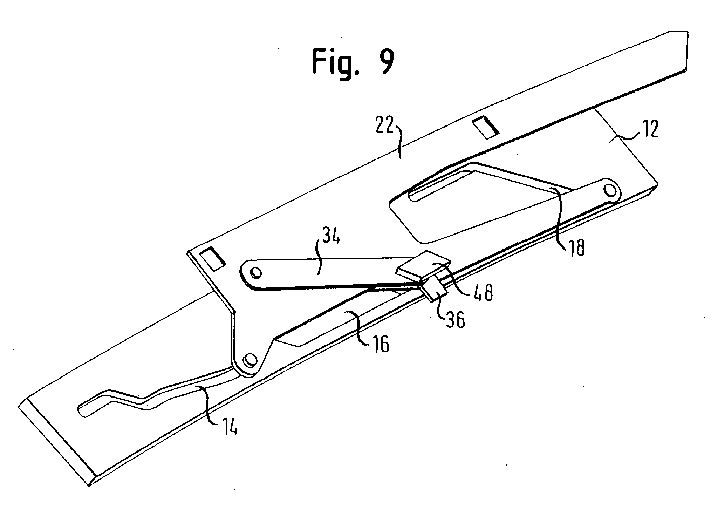

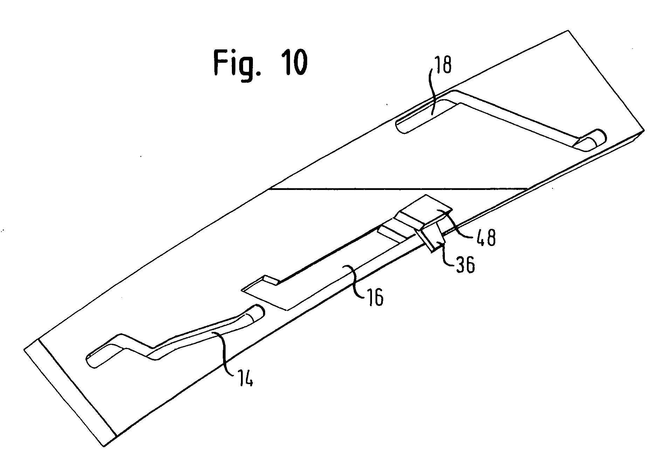

In den Figuren 8 bis 10 ist schematisch eine dritte Ausführungsform gezeigt. Für die von den vorangegangenen Ausführungsformen bekannten Bauelemente werden dieselben Bezugszeichen verwendet, und es wird insoweit auf die obigen Erläuterungen verwiesen.

Die dritte Ausführungsform unterscheidet sich von der ersten und der zweiten Ausführungsform zum einen dadurch, daß kein Hubhebel verwendet wird, sondern daß das in Fahrzeuglängsrichtung gesehen hintere Ende des Deckelträgers 22 unmittelbar mit der Hubkulisse gekoppelt ist. Zum anderen unterscheidet sich die dritte Ausführungsform von der ersten und der zweiten Ausführungsform dadurch, daß der Rasthaken 36 keinen Schwenkhebel 40 aufweist, sondern zwei parallelogrammförmige Gleiter 48, welche in die Rastkulisse 16 eingreifen. Da die Gleiter 48 fest mit dem Rasthaken 36 verbunden sind und die Gleiter 48 nahezu spielfrei in der Rastkulisse 16 geführt sind, ist auf diese Weise die Orientierung des Rasthakens 36 gewährleistet; der Rasthaken 36 erstreckt sich vertikal nach unten.

Die Funktionsweise beim Mechanismus gemäß der dritten Ausführungsform entspricht derjenigen bei der ersten und der zweiten Ausführungsform. Wenn der Schlitten 12 ausgehend von der Ruhestellung mit geschlossenem Deckelträger 22 nach hinten verstellt wird, wird der Deckelträger 22 von der Führungskulisse 14 und der Hubkulisse 18 angehoben. Im Unterschied zu der ersten und der zweiten Ausführungsform erfolgt dies jedoch ohne die Übersetzung des Hubhebels, sondern direkt durch die Hubkulisse. In Längsrichtung betrachtet wird der Deckelträger 22 über den Koppelhebel 34 und den Rasthaken 36 festgehalten. Kurz bevor der Deckelträger 22 das Ende der Führungskulisse 14 und der Hubkulisse 18 erreicht, treten die Gleiter 38 des Rasthakens 36 in den Hubabschnitt der Rastkulisse 16 ein und heben den Rasthaken 36 aus der Rastaussparung 42 der Führungsschiene 10. Daraufhin kann der Deckelträger 22 vom Schlitten 12 in Längsrichtung des Fahrzeugs nach hinten mitgenommen werden. Umgekehrt wird der Deckelträger so lange vom Schlitten 12 über den Rasthaken 36 und den Koppelhebel 34 nach vorne verstellt, bis der Rasthaken 36 in die Rastaussparung 42 eintauchen kann. Daraufhin ist der Deckelträger 22 wieder in Längsrichtung arretiert, und er kann in seine geschlossene Stellung überführt werden.

Alle Ausführungsformen haben den gemeinsamen Vorteil, daß sie eine (in Längsrichtung des Fahrzeugs betrachtet) sehr kurze Baulänge haben. Dies ist insbesondere darauf zurückzuführen, daß der Rasthaken 36 zwischen dem Führungsstift 24 und dem Hubstift 28 angeordnet ist. Ein Vorteil der ersten und der zweiten Ausführungsform besteht darin, daß trotz einer vergleichsweise geringen Bauhöhe ein großer vertikaler Hub des Deckelträgers 22 erzielt werden kann, da der Hubhebel 26 für die erforderliche Übersetzung sorgt. Schließlich besteht ein großer Vorteil der drei Ausführungsformen darin, daß durch die Verstellung eines einzigen Schlittens sämtliche relevanten Bewegungen erhalten werden, also sowohl die Hubbewegung des Deckelträgers 22 als auch die Hubbewegung des Rasthakens 36.

### Bezugszeichenliste

- 5:: Schiebe-/Hub-Dach
- 6:: Fahrzeugdach
- 7:: erster Deckel
- 9:: zweiter Deckel
- 10:: Führungsschiene
- 12:: Schlitten
- 14:: Führungskulisse
- 16:: Rastkulisse
- 18:: Hubkulisse
- 20:: Stützgleiternut
- 22:: Deckelträger
- 24:: Führungsstift
- 26:: Hubhebel
- 28:: Hubstift
- 30:: Stützbolzen
- 32:: Stützgleiter
- 34:: Koppelhebel
- 36:: Rasthaken
- 38:: Raststift
- 40:: Schwenkhebel
- 42:: Rastaussparung
- 44:: Riegelbolzen
- 46:: Riegelhaken
- 48:: Gleiter

## Patentansprüche

1. Baugruppe bestehend aus mindestens einer Führungsschiene (10), einem in der Führungsschiene verstellbaren Schlitten (12) und einem Deckelträger (22), der dafür vorgesehen ist, einen Deckel (7, 9) eines Schiebe-/Hub-Daches (5) für ein Fahrzeug zu tragen, wobei der Schlitten mit einer Hubkulisse (18), einer Führungskulisse (14) und einer Rastkulisse (16) versehen ist.

2. Baugruppe nach Anspruch 1, **dadurch gekennzeichnet, daß** der Deckelträger (22) unmittelbar in die Führungskulisse (14) eingreift.

3. Baugruppe nach Anspruch 2, **dadurch gekennzeichnet, daß** die Führungskulisse (14) einen etwa parallel zur Längsrichtung der Führungsschiene verlaufenden, kurzen Startabschnitt, daran anschließend einen vergleichsweise sanft ansteigenden Ausstellabschnitt, daran anschließend einen etwa parallel zur Längsrichtung der Führungsschiene verlaufenden, kurzen Zwischenabschnitt, daran anschließend einen vergleichsweise steil ansteigenden Hubabschnitt und daran anschließend einen etwa parallel zur Längsrichtung der Führungsschiene verlaufenden Endabschnitt aufweist.

4. Baugruppe nach einem der vorhergehenden Ansprüche, **dadurch gekennzeichnet, daß** der Deckelträger (22) unmittelbar in die Hubkulisse (18) eingreift.

5. Baugruppe nach Anspruch 4, **dadurch gekennzeichnet, daß** die Hubkulisse (18) einen etwa parallel zur Längsrichtung der Führungsschiene verlaufenden Startabschnitt, daran anschließend einen vergleichsweise steil ansteigenden Hubabschnitt und daran anschließend einen wieder etwa parallel zur Längsrichtung der Führungsschiene verlaufenden Endabschnitt aufweist.

6. Baugruppe nach einem der Ansprüche 1 bis 3, **dadurch gekennzeichnet, daß** der Deckelträger (22) mit einem Hubhebel (26) gekoppelt ist, der in die Hubkulisse (18) eingreift.

7. Baugruppe nach Anspruch 6, **dadurch gekennzeichnet, daß** der Hubhebel (26) ein zweiarmiger Hebel ist, der im Drehpunkt in einem Stützgleiter (32) abgestützt ist, der verschiebbar in der Führungsschiene (10) angeordnet ist.

8. Baugruppe nach Anspruch 7, **dadurch gekennzeichnet, daß** der Schlitten mit einer Stützgleiternut (20) versehen ist, in welcher der Stützgleiter (32) geführt ist.

9. Baugruppe nach einem der Ansprüche 6 bis 8, **dadurch gekennzeichnet, daß** die Hubkulisse (18) einen etwa parallel zur Längsrichtung der Führungsschiene verlaufenden Startabschnitt, daran anschließend einen nach unten verlaufenden ersten Hubabschnitt, daran anschließend einen etwa parallel zur Längsrichtung der Führungsschiene verlaufenden Zwischenabschnitt, daran anschließend einen weiter nach unten verlaufenden zweiten Hubabschnitt und daran anschließend einen etwa parallel zur Längsrichtung der Führungsschiene verlaufenden Endabschnitt aufweist.

10. Baugruppe nach einem der vorhergehenden Ansprüche, **dadurch gekennzeichnet, daß** ein Rasthaken (36) vorgesehen ist, der zwischen einer Raststellung, in der er an der Führungsschiene (10) arretiert ist, und einer Freigabestellung verstellbar ist, in der er relativ zur Führungsschiene (10) verschiebbar ist.

11. Baugruppe nach Anspruch 10, **dadurch gekennzeichnet, daß** der Rasthaken (36) unmittelbar in die Rastkulisse (16) eingreift.

12. Baugruppe nach einem der Ansprüche 10 und 11, **dadurch gekennzeichnet, daß** die Rastkulisse (16) einen etwa parallel zur Längsrichtung der Führungsschiene verlaufenden, vergleichsweise langen Leerlaufabschnitt und daran anschließend einen nach oben ansteigenden Hubabschnitt aufweist.

13. Baugruppe nach einem der Ansprüche 10 bis 12, **dadurch gekennzeichnet, daß** der Rasthaken (36) durch einen Koppelhebel (34) mit dem Deckelträger (22) verbunden ist.

14. Baugruppe nach einem der Ansprüche 10 bis 13, **dadurch gekennzeichnet, daß** der Rasthaken (36) durch einen Schwenkhebel (40) mit dem Stützgleiter (32) verbunden ist.

15. Baugruppe nach Anspruch 14, **dadurch gekennzeichnet, daß** der Schwenkhebel (40) in einem Langloch geführt ist.

16. Baugruppe nach einem der Ansprüche 10 bis 13, **dadurch gekennzeichnet, daß** der Rasthaken (36) von der Rastkulisse hinsichtlich seiner Ausrichtung im Raum geführt ist.

17. Baugruppe nach einem der vorhergehenden Ansprüche, **dadurch gekennzeichnet, daß** am Schlitten (12) ein Riegelelement (46) vorgesehen ist, das mit einem komplementären Riegelelement (44) am Deckelträger (22) zusammenwirken kann.

18. Baugruppe nach Anspruch 17, **dadurch gekennzeichnet, daß** das Riegelelement am Schlitten (12) ein Riegelhaken (46) und das Riegelelement am Deckelträger (22) ein Riegelbolzen (44) ist.
